Europäisches Patentamt

European Patent Office

Office européen des brevets

(11) Veröffentlichungsnummer : **0 046 623**
**B1**

(12) **EUROPÄISCHE PATENTSCHRIFT**

(45) Veröffentlichungstag der Patentschrift :
**07.12.83**

(51) Int. Cl.³ : **H 04 M 3/50, H 04 M 11/02**

(21) Anmeldenummer : **81200924.9**

(22) Anmeldetag : **20.08.81**

(54) **Anlage zur Speicherung von an verschiedene Adressaten gerichteten mündlichen Meldungen und zu deren Wiedergabe beim Abruf durch einen Adressaten.**

(30) Priorität : **26.08.80 CH 6410/80**

(43) Veröffentlichungstag der Anmeldung :
**03.03.82 Patentblatt 82/09**

(45) Bekanntmachung des Hinweises auf die Patenterteilung : **07.12.83 Patentblatt 83/49**

(84) Benannte Vertragsstaaten :
**AT BE CH DE FR GB IT LI LU NL**

(56) Entgegenhaltungen :
**US-A- 4 049 915**
**ICC'79 CONFERENCE RECORD; 10-14. Juni 1979 BOSTON (US) R. NACON "New custom callong services", Seiten 3.2.1 bis 3.2.5**

(73) Patentinhaber : **Autophon A.G.**
**Ziegelmattstrasse 1-15**
**CH-4500 Solothurn 3 (CH)**

(72) Erfinder : **Van der Floe, Hans**
**Mannwilweg**
**CH-2545 Selzach (CH)**

(74) Vertreter : **Schweizer, Hans et al**
**Bovard AG Patentanwälte VSP Optingenstrasse 16**
**CH-3000 Bern 25 (CH)**

## Anlage zur Speicherung von an verschiedene Adressaten gerichteten mündlichen Meldungen und zu deren Wiedergabe beim Abruf durch einen Adressaten

Die vorliegende Erfindung betrifft eine in Verbindung mit einer Telefonzentrale stehende Anlage mit ersten Schaltungsmitteln zur Speicherung von mündlichen Meldungen, welche über das Telefon übermittelt werden und an verschiedene bestimmte Adressaten gerichtet sind. Diese ersten Schaltungsmittel erlauben ferner, bei einem über das Telefon erfolgenden Abruf durch einen Adressaten die gespeicherten Meldungen wiederzugeben.

In der US-Patentschrift 4 049.915 ist beispielsweise eine solche Anlage beschrieben, welche an eine öffentliche Telefonzentrale angeschlossen ist und es erlaubt, an abwesende Telefonteilnehmer gerichtete Meldungen in einem zentral angeordneten Speicher derart zu speichern, dass sie vom betreffenden Teilnehmer nach seiner Rückkehr abgerufen und ihm zugesprochen werden können. Zu diesem Zwecke weist jene Anlage Schaltungsmittel auf, welche, sofern ein über die Telefonzentrale angerufener Teilnehmer innerhalb einer bestimmten Zeit nicht antwortet, den Anrufer mündlich auffordern, eine Meldung zwecks Speicherung abzugeben. Ein Teilnehmer, für welchen in seiner Abwesenheit Meldungen gespeichert wurden, wird, sofern er nach Hause zurückgekehrt ist, bei der nächsten Benützung seiner Telefon-Station durch ein besonderes, dem Wählzeichen überlagertes Signal auf das Vorliegen der gespeicherten Meldung aufmerksam gemacht. Die Meldungen können auf einfache Weise von der eigenen Station aus abgefragt werden. Eine Abfrage von einer beliebigen Station aus ist über eine nur dem Berechtigten bekannte Nummer ebenfalls möglich.

Eine ähnliche Anlage ist im ICC'79 Conference Record, 10.-14. Juni 1979 Boston, beschrieben, und zwar im Bericht von R. Macon : « New custom calling services », Seiten 3.2.1 bis 3.2.5. Auch in dieser Anlage wird der Adressat einer Meldung bei der einer Abwesenheit folgenden Rückkehr an seinen Arbeitsplatz auf die gleiche Weise darauf aufmerksam gemacht wie in der zuerst beschriebenen Anlage. Für den Abruf von Meldungen von einer beliebigen Telefon-Station aus muss der Adressat vorerst eine (allen Teilnehmern gemeinsame) Abruf-Nummer, anschliessend seine eigene Nummer und zuletzt eine nur ihm bekannte Kode-Nummer wählen.

Diese bekannten Anlagen sind somit nur dann in der Lage, einen Adressaten von Meldungen auf das Vorliegen solcher Meldungen aufmerksam zu machen, wenn er seine eigene Telefonstation für einen abgehenden Anruf benützt. Es besteht jedoch das Bedürfnis, das Vorliegen einer Meldung dem Adressaten sobald als möglich anzuzeigen. Dies gilt insbesondere in Nebenstellen-Telefon-Anlagen.

In der Zeitschrift « Business Week » 29. September 1980, Seite 98, mittlere Spalte unten ist eine den beiden eingangs erwähnten Anlagen einigermassen entsprechende Anlage beschrieben, bei welcher der Adressat einer Meldung durch eine drahtlose Rufanlage auf das Vorliegen einer Meldung aufmerksam gemacht wird. Auch dort können die Meldungen von irgend einer Telefon-Teilnehmerstation aus abgefragt werden. Aus den bekanntgewordenen Angaben über diese Anlage geht nicht hervor, ob die Berechtigung zum Abruf von Meldungen geprüft wird. Es ist anzunehmen, dass dies in gleicher Weise wie bei den zuerst beschriebenen Anlagen bewerkstelligt wird.

Es ist schon vorgeschlagen worden, in drahtlosen Rufanlagen mit ein akustisches Signal abgebenden Rufempfängern, bei denen mehrere Rufvorgänge gleichzeitig ablaufen können und bei denen sich ein Gerufener über das Telefon mit dem Rufenden in Verbindung setzt, diesen Antwortvorgang durch Uebertragung des vom Rufempfänger abgegebenen akustischen Signals zu vereinfachen. Der Gerufene braucht bei der Beantwortung eines Rufs nur eine allen Teilnehmern gemeinsame Antwortnummer zu wählen und das Mikrofon in die Nähe des Rufempfängers zu halten. Das nächste vom Rufempfänger abgegebene akustische Signal gelangt dann über die Teilnehmerleitung des Antwortenden nach der Vermittlungsstelle, wo der antwortende Gerufene aufgrund des Zeitpunktes, in welchem das akustische Signal auftritt, mit dem richtigen Rufenden zusammengeschaltet wird.

Mit der vorliegenden Erfindung wird nun beim Abruf von gespeicherten Meldungen durch den Adressaten, unter Ausnützung der an sich bekannten Uebertragung des von einem Rufempfänger abgegebenen akustischen Signals über eine Teilnehmerleitung, eine wesentliche Vereinfachung erzielt, während das Abhören dieser Meldungen durch Unbefugte mindestens so gut verhindert ist wie bei den bekannten Anlagen.

Die Erfindung betrifft eine Anlage nach dem Oberbegriff des Anspruchs 1, welche durch dritte Schaltungsmittel gekennzeichnet ist, wobei diese dritten Schaltungsmittel aufgrund der Einleitung eines Abrufs in den Arbeitszustand versetzt werden und dabei die zweiten Schaltungsmittel veranlassen, ein Rufsignal, das beim Rufempfänger des Adressaten der abgerufenen Meldung die Erzeugung eines akustischen Signals bewirkt, auszusenden. Ein weiteres Kennzeichen der Erfindung besteht darin, dass diese dritten Schaltungsmittel auf den Empfang dieses akustischen Signals ansprechen, das ihnen über die zum Abruf benützte Teilnehmerstation, die zugehörige Teilnehmerleitung und die Zentrale zugeführt wird und dass diese dritten Schaltungsmittel die Wiedergabe einer abgerufenen gespeicherten Meldung durch die ersten Schaltungsmittel vom Empfang des genannten, der Identifizierung des Anrufers dienenden akustischen Signals abhängig machen.

In einer besondern Ausführungsform erlaubt die Erfindung einem Dritten, insbesondere dem Hinterleger einer Meldung, festzustellen, ob die Meldung vom Adressaten abgerufen wurde.

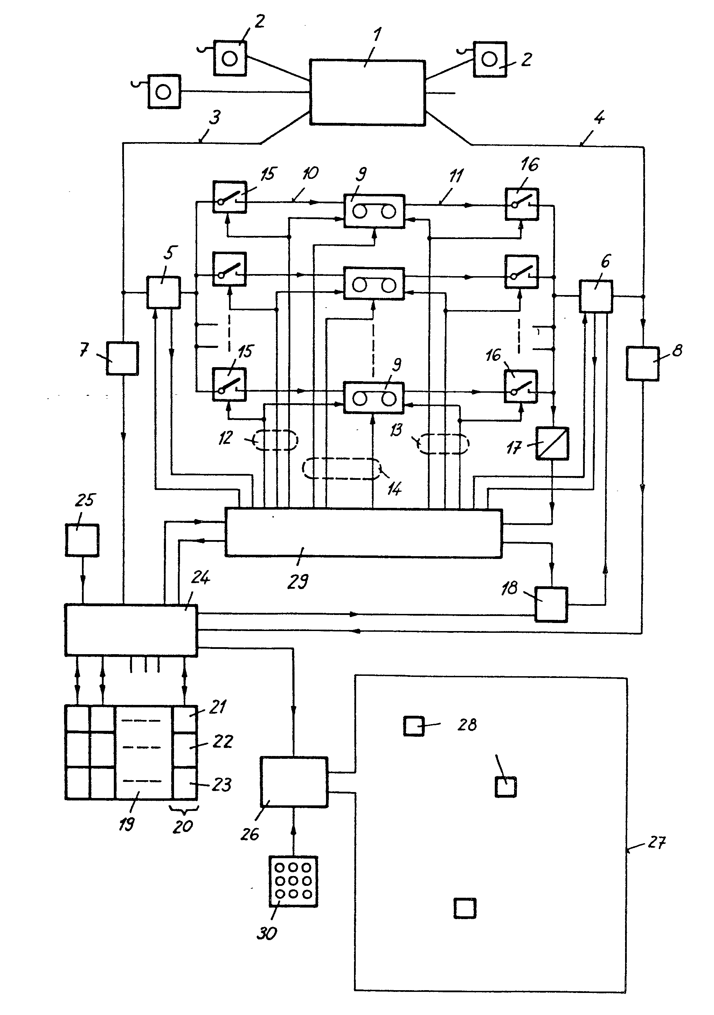

Die Erfindung wird nun anhand eines Ausführungsbeispiels erklärt. Die Figur zeigt das diesbezügliche Blockschema.

An eine Nebenstellen-Telefonzentrale 1 sind Teilnehmerstationen 2 angeschlossen. Eine als gewöhnliche Teilnehmerleitung geschaltete Meldungs-Eingabeleitung 3 und eine ebenfalls als gewöhnliche Teilnehmerleitung geschaltete Abfrageleitung 4 verbinden je einen Stromkreis 5 und 6 für Ruferkennung und Antwort und je einen Knackwahl-Auswertungsstromkreis 7 und 8 mit der Telefonzentrale. Mehrere Band-Ton-Speichergeräte 9 besitzen je einen Aufnahmeeingang 10 und einen Wiedergabeausgang 11. Sie werden über die Verbindungen 12 auf Aufnahme, über die Verbindungen 13 auf Wiedergabe und über die Verbindungen 14 auf Rückspulen gesteuert. Ueber die elektronischen Schalter 15 sind die Speichergeräte 9 mit dem Antwortstromkreis 5 und über die elektronischen Schalter 16 mit dem Antwortstromkreis 6 verbindbar. Ein Ton-Detektor 17 erzeugt beim Empfang eines von einem (später erklärten) Rufempfänger empfangenen Tones einen Steuerimpuls. Der digital gesteuerte Spracherzeuger 18 gibt beliebige Sprachsignale ab, wenn er entsprechend gesteuert wird.

Ein Digitalspeicher 19 ist unterteilt in eine der Zahl der Speichergeräte 9 entsprechende Zahl von Teilspeichern 20. Jeder dieser Teilspeicher ist seinerseits unterteilt in drei Bereiche, wobei im Bereich 21 eine Zahl zwischen eins und zehn, im Bereich 22 eine Teilnehmernummer und im Bereich 23 eine Uhrzeit gespeichert ist. Ein Speicher-Steuergerät 24 tastet den Speicher 19 ab, speichert ein und aus und verarbeitet und ändert die eingespeicherten Werte. Ein Uhrenstromkreis 25 gibt in digitaler Weise einerseits die momentane Uhrzeit ab und liefert anderseits alle Minuten einen Steuerimpuls.

Eine auf induktivem Prinzip arbeitende Personensuchanlage besteht aus dem Steuergerät mit Sender 26, einer Induktionsschleife 27 und tragbaren Rufempfängern 28. Das Steuergerät 26 ist sowohl durch das Steuergerät 24 als auch durch die Tastatur 30 steuerbar. Die Art der Signale, die jeweils von den Rufempfängern 28 abgegeben werden, hängt dabei von der Herkunft der Steuersignale ab, welche das Gerät 26 zur Aussendung eines Rufes veranlasst haben. Das Haupt-Steuergerät 29 sorgt für eine Zusammenarbeit unter den beschriebenen Geräten und steuert in nachstehend dargelegter Weise den Ablauf der Schalt- und Speichervorgänge.

Vorerst wird angenommen, dass in keinem der Tonaufnahme-Geräte 9 und dementsprechend auch in keinem der Teilspeicher 20 etwas gespeichert ist. Möchte nun einer der Teilnehmer 2 einem andern Teilnehmer, dessen Abwesenheit vom Arbeitsplatz oder dessen Wunsch, nicht gestört zu werden er festgestellt hat, eine Meldung zukommen lassen, wählt er an seiner Station mit Hilfe der Nummernscheibe eine besondere Nummer für die Meldungseingabe und gelangt damit auf die Leitung 3, an welche von der Zentrale Rufspannung angelegt wird. Im Antwortkreis 5 wird diese Rufspannung ausgewertet, und es wird dort ein Schleifenschluss eingeleitet und damit die Verbindung in der Zentrale durchgeschaltet. Der Anruf wird sodann an das Haupt-Steuergerät 29 gemeldet. Der anrufende Teilnehmer wählt nun die Nummer desjenigen Teilnehmers, für welchen er eine Meldung hinterlegen möchte. Auf der Leitung 3 erscheinen dabei bekanntlich durch Differenzieren aus den von der Nummernscheibe erzeugten Unterbrechungsimpulsen gewonnen Knack-Impulse. Diese Knack-Impulse werden im Knackwahl-Auswertungsstromkreis 7 ausgewertet, und die gewählte Nummer wird an das Speicher-Steuergerät 24 geleitet. Dort wird diese Nummer zwischengespeichert, und durch Abtasten des Speichers 19 wird festgestellt, ob diese Nummer bereits in einem der Bereiche 22 des Speichers enthalten ist. Da dies voraussetzungsgemäss nicht der Fall ist, belegt das Speicher-Steuergerät 24 einen der freien Teilspeicher 20, speichert die gewählte Teilnehmernummer in den Bereich 22 dieses Teilspeichers ein und übermittelt die Kennung des Teilspeichers an das Haupt-Steuergerät 29. Jedem Teilspeicher 20 ist eines der Ton-Speichergeräte 9 fest zugeordnet, und das Haupt-Steuergerät 29 verbringt nun über die entsprechende Verbindung 12 den zum belegten Teilspeicher und Speichergerät gehörenden Schalter 15 in den leitenden Zustand und schaltet das Aufnahmegerät 9 auf Aufnahme-Betrieb. Gleichzeitig erteilt das Haupt-Steuergerät 29 dem Speicher-Steuergerät 24 den Befehl, die von der Uhr 25 gelieferte Uhrzeit in den Bereich 23 des ausgewählten Teilspeichers einzuspeichern. Der anrufende Teilnehmer kann nun über die Telefonzentrale 1, die Verbindung 3, den Antwortstromkreis 5 und den entsprechenden Schalter 15 seine Meldung auf das entsprechende Tonaufnahmegerät 9 sprechen. Im Antwortstromkreis 5 ist eine Sprachüberwachung eingebaut, welche, nachdem die Meldung fertig gesprochen ist, nach einer gewissen Zeit die Schleife 3 unterbricht und an die Haupt-Steuereinrichtung 29 eine diesbezügliche Meldung abgibt, worauf von dort der Schalter 15 und der Betrieb des Ton-Speichergerätes 9 unterbrochen werden. Das letztgenannte Gerät bleibt bis auf weiteres stehen.

Wäre bei der Prüfung der im Speicher 19 befindlichen Teilnehmernummer festgestellt worden, dass die Nummer, für welche eine Meldung aufgezeichnet werden soll, bereits in einem Teilspeicher 20 enthalten und somit für den betreffenden Adressaten bereits mindestens eine Meldung gespeichert gewesen wäre, hätten die beiden Steuergeräte 24 und 29 den Anruf auf jenes Speichergerät geschaltet und damit die neue Meldung an die bereits für den betreffenden Adressaten vorhandene angehängt. Die Uhrzeit im Speicher wäre dabei nicht verändert worden.

Jede Minute veranlasst die Uhr 25 das Speicher-Steuergerät 24, alle Teilnehmer abzutasten und dabei festzustellen, welche dieser Teilspeicher 20 durch eine Nummer belegt und welche Tonspeicher 9 dementsprechend eine Meldung für den dieser Nummer entsprechenden Adressaten enthalten. Sofern es einen belegten Teilspeicher findet, bei welchem im Bereich 21 nichts gespeichert ist, übermittelt es die entsprechende Teilnehmernummer an das Steuergerät 26 der Personensuchanlage, welche durch die Aussendung eines dieser Nummer entsprechenden Signals am Rufempfänger des Adressaten der betreffenden Meldung ein Tonsignal erzeugt, um ihn auf das Vorhandensein einer Meldung aufmerksam zu machen. In den Bereich 21 des entsprechenden Teilspeichers wird dabei die Zahl eins eingeschrieben.

Sofern das Steuergerät 24 auf einen Teilspeicher trifft, in welchem im Bereich 21 eine von null oder zehn verschiedene Zahl gespeichert ist, wird diese Zahl um eins erhöht und kein Signal über die Personensuchanlage ausgesendet. Die Zahl zehn wird behandelt wie die null. Da jede Minute eine Abtastung stattfindet, werden somit die Empfänger der Adressaten von gespeicherten Meldungen alle 10 Minuten angerufen und daran erinnert, dass Meldungen für sie gespeichert sind.

Wünscht nun ein durch die Personensuchanlage auf das Vorliegen einer Meldung aufmerksam gemachter Teilnehmer diese Meldung abzuhören, wählt er über die Telefonzentrale 1 die Leitung 4 und damit den Antwortstromkreis 6 und den Knackwahl-Auswertungsstromkreis 8 an. Sodann wählt er seine eigene Nummer und hält seinen Personensuchempfänger in die Nähe des Mikrofons. Die Beantwortung des Anrufs und die Uebermittlung der gewählten Nummer spielen sich dabei gleich ab wie bei der Einspeicherung einer Meldung. Auch in diesem Fall sucht das Speicher-Steuergerät 24 nach dem Teilspeicher, in dem die der gewählten Nummer entsprechende Nummer gespeichert ist. Im Normalfall wird diese Nummer gefunden, womit auch das Tonaufnahmegerät 9 bestimmt ist, auf welchem die gesuchte Meldung gespeichert ist. Das Haupt-Steuergerät 29 veranlasst nun das Speicher-Steuergerät 24 zur Abgabe der betreffenden Nummer an das Personensuch-Steuergerät 26. Infolgedessen ertönt ein Signal am Rufempfänger des Teilnehmers, welcher die für ihn bestimmte Meldung abhören will. Der Ton gelangt über die Zentrale 1, die Leitung 4 und den Antwort-Stromkreis 6 auf den Ton-Detektor 17, welcher auf den Ton der Rufempfänger abgestimmt ist und an das Haupt-Steuergerät 29 meldet, dass der Ton empfangen wurde. Das Haupt-Steuergerät stellt damit fest, dass der Anrufer zum Abhören berechtigt ist und legt an diejenige Verbindung 13, welche dem die gesuchte Nummer enthaltenden Teilspeicher 20 entspricht, ein Signal an. Indem dann das betreffende Tonaufnahmegerät zuerst zurückgespult und anschliessend über die Leitung 4 und die Telefonzentrale abgespielt wird, wird die gespeicherte Meldung dem Anrufer übermittelt. Nachdem die im Antwortstromkreis 6 vorhandene Sprachüberwachung festgestellt hat, dass sämtliche Meldungen abgespielt sind, gibt das Haupt-Steuergerät 29 über die entsprechende Verbindung 14 den Befehl zur Rückspulung des abgespielten Aufnahmegerätes, und im zugehörigen Teilspeicher werden sämtliche Angaben gelöscht. Teilspeicher und Tonaufnahmegerät stehen damit wiederum für die Aufnahme einer neuen Meldung bereit.

Sofern ein Teilnehmer feststellen will, ob für einen bestimmten andern Teilnehmer Meldungen gespeichert sind, muss er gleich vorgehen wie ein Teilnehmer, der eine für ihn gespeicherte Meldung abrufen will, mit dem Unterschied, dass er nicht seine eigene, sondern eine fremde Nummer übermittelt. Im Gegensatz zum Abruf einer Meldung durch einen Berechtigten ist es im vorliegenden Falle nicht sicher, ob überhaupt eine solche Meldung vorliegt. Sofern nun das Speicher-Steuergerät 24 für den betreffenden Teilnehmer keine Meldung findet, wird die Aussendung eines Rufs über die Personensuchanlage unterlassen, wodurch der unbeteiligte Teilnehmer (bei dem das Vorliegen von Meldungen geprüft werden soll) nicht verwirrt wird. Dagegen wird der Spracherzeuger 18 vom Haupt-Steuergerät 29 veranlasst, über den Stromkreis 6 und die Leitung 4 dem Anfrager bekannt zu geben, dass keine Meldung vorliegt.

Sofern nun jedoch für die vom Anfragenden gewählte Nummer eine Einspeicherung in einem der Teilspeicher gefunden wird, wird — wie vorher beschrieben — dem der eingegebenen Nummer entsprechenden Teilnehmer durch die Personensuchanlage ein Tonsignal übermittelt, was nicht stört, da der betreffende Teilnehmer ohnehin alle zehn Minuten einen solchen Anruf erhält. Im Gegensatz zu den Vorgängen bei einem Abruf einer Meldung gelangt nun aber dieses Tonsignal nicht über die Leitung 4 auf den Ton-Detektor 17. Das Haupt-Steuergerät 29 erteilt dann keinen Befehl zum Abspielen des entsprechenden Tonbandes, wodurch der Anfrager, welcher zum Abhören der Meldung nicht berechtigt ist, den Inhalt der Meldung nicht erfährt. Dagegen reagiert das Haupt-Steuergerät 29 mit einem Befehl an das Speicher-Steuergerät 24, die Uhrzeit, die im die eingegebene Nummer enthaltenden Teilspeicher 20 gespeichert ist, an den Spracherzeuger 18 zu übermitteln, von wo sie mündlich dem Anfrager zugesprochen wird. Der Anrufer kann aus dieser Angabe entnehmen, dass eine Abfrage nicht oder spätestens vor dieser Uhrzeit stattgefunden hat. Dies erlaubt ihm zu beurteilen, ob eine bestimmte Meldung, die er selbst (um eine bestimmte Zeit) eingespeichert hat, bereits zur Kenntnis des Adressaten gelangt ist.

Um zu verhindern, dass gespeicherte Meldungen überhaupt nicht abgerufen werden und dass damit die Aufnahmekapazität der Anlage erschöpft wird, werden bei Mangel an solcher Kapazität die Meldungen für denjenigen Adressaten gelöscht, für welchen die älteste Meldung gespeichert ist. Vorgängig dieser Löschung wird jedoch der Adressat der zu löschenden Meldungen gewarnt, indem sein Rufempfänger nicht mehr ihn zehnsondern in einminütigen Abständen angerufen wird. Dies wird erreicht, indem bei jeder durch die Uhr 25 eingeleiteten Abtastung des Speichers 19 ausser den beschriebenen Funktionen die Zahl der leeren Teilspeicher gezählt und die früheste gespeicherte Uhrzeit festgestellt wird, wobei die beiden Werte im Speicher-Steuergerät 24 festgehalten werden. Sofern festgestellt wird, dass nur noch ein einziger leerer Teilspeicher 20 vorhanden ist, wird die Abtastung der Teilspeicher wiederholt und dabei bei demjenigen Teilspeicher, der die früheste (im Steuergerät 24 gespeicherte) Uhrzeit aufweist, die gespeicherte Teilnehmernummer an das Steuergerät 26 der Personensuchanlage übermittelt, so dass der betreffende Teilnehmer, solange die Knappheit an Speicherplatz andauert, jede Minute angerufen wird. Wird die Knappheit durch Abruf irgendeiner gespeicherten Meldung behoben, kehrt die Warnung wiederum auf den Zehnminuten-Takt zurück.

Sofern vom Steuergerät 24 bei einer Abtastung festgestellt wird, dass kein leerer Teilspeicher mehr vorhanden ist, wird in einer zweiten, an die erste anschliessenden Abtastung wiederum der Teilspeicher mit der ältesten Aufzeichnung gesucht, dieser Teilspeicher gelöscht und über das Haupt-Steuergerät 29 und die betreffende Verbindung 14 das diesem Teilspeicher zugeteilte Tonaufnahmegerät 9 zurückgespult.

Die Tastatur 30, welche direkt auf das Steuergerät 26 der Personensuchanlage einwirkt, ermöglicht es, dringende Suchvorgänge zu veranlassen, bei denen der Abstand zwischen zwei Rufen etwa zehn Sekunden beträgt und bei denen verlangt wird, dass sie möglichst rasch beantwortet werden. Das Steuergerät 26 bewirkt — wie vorher ausgeführt wurde — bei der Steuerung durch die Tastatur die Erzeugung von besonderen Signalen an den Rufempfängern, aus welchen der Gesuchte — als zusätzliches Merkmal zur kurzen Periodendauer — die Dringlichkeit des Anrufes entnehmen kann.

Der dringende Suchvorgang könnte auch, sofern man das Vorhandensein von Anpassungsstromkreisen an der Telefonzentrale oder sonstige diesbezügliche Eingriffe voraussetzt, in bekannter Weise über die Zentrale ausgelöst und beantwortet werden. In diesem Falle müssten zu diesem Zwecke an den Teilnehmerstationen Nummern gewählt werden, die sich von denjenigen zur Eingabe und zum Abruf von Meldungen unterscheiden.

Die Erfindung ist natürlich zur Uebermittlung von Teilnehmernummern keineswegs an die Uebertragung mit Knackwahl gebunden. Eine Gleichstromübertragung, bei welcher die Antwortstromkreise 5 und 6 und die Knackwahl-Stromkreise 7 und 8 durch einfache Anschaltstromkreise ersetzt werden könnten, käme in Frage, wenn die Zentrale entsprechend angepasst oder ausgerüstet wäre. Bei der Verwendung von Tonfrequenz-Wahl in der Telefonanlage könnten die Knackwahl-Stromkreise durch Tonfrequenz-Detektor-Stromkreise ersetzt werden. Anstelle von zwei Anschlüssen 3 und 4 an der Zentrale könnte ein einziger verwendet werden, wenn durch weitere Stromkreise ermöglicht würde, mittels Wahl einer zusätzlichen Ziffer Einspeicherung oder Abruf zu bestimmen. Die dabei auftretende Einschränkung, dass nicht gleichzeitig eingespeichert und abgefragt werden kann, kann hingenommen werden, wenn die Zentrale eine beschränkte Anschluss-Kapazität besitzt.

Die Erfindung ist auch in weiteren Punkten nicht an das Ausführungsbeispiel gebunden. Anstelle der Uhrzeit der ältesten Einspeicherung könnte auch die Uhrzeit der letzten Abfrage durch einen bestimmten Adressaten bekanntgegeben werden, wenn Schaltungsmittel vorgesehen würden, die bei jedem Abruf von Meldungen die Nummer des Adressaten und die Uhrzeit der Abfrage speicherten.

Anstelle des Spracherzeugers könnte eine einfache Einrichtung mit Ton-Signalisierung verwendet werden, oder es könnte auf die Möglichkeit überhaupt verzichtet werden, dass durch Teilnehmer, die zum Abhören von Meldungen nicht berechtigt sind, das Vorliegen von Meldungen und die Uhrzeit von deren Einspeicherung erfragt werden kann. Auch auf das automatische Löschen und auf die Warnung bei knappem Speicherraum könnte verzichtet werden, ohne den Erfindungsgedanken zu verlassen.

Die Zeitabstände der Suchvorgänge wurden im Beispiel willkürlich auf eine und auf zehn Minuten festgesetzt. Es ist selbstverständlich, dass diese Zeiten entsprechend den praktischen Erfordernissen ganz beliebig gewählt werden können.

Die Meldungen könnten auch digital gespeichert werden, und es könnten anstelle von Tonbändern Magnetplatten oder Speicher anderer Art verwendet werden.

**Ansprüche**

1. In Verbindung mit einer Telefonzentrale (1) stehende Anlage mit ersten Schaltungsmitteln (9) zur Speicherung von über das Telefon übermittelten, je an verschiedene bestimmte Adressaten (2) gerichteten mündlichen Meldungen und zu deren Wiedergabe beim über das Telefon erfolgenden Abruf durch einen Adressaten (2), ferner mit zweiten Schaltungsmitteln (26, 27) zur drahtlosen Aussendung von den einzelnen Adressaten zugeordneten Rufsignalen und mit den einzelnen Adressaten zugeteilten Rufempfängern (28), welche je auf den Empfang eines von den zweiten Schaltungsmitteln (26, 27) ausgesendeten, dem betreffenden Adressaten zugeordneten Rufsignals mit der Erzeugung eines akustischen Signals reagieren, wobei die ersten Schaltungsmittel (9), solange damit Meldungen gespeichert sind, mit Hilfe der zweiten Schaltungsmittel (26, 27) und der Rufempfänger (28) die Adressaten dieser Meldungen durch das genannte akustische Signal periodisch auf das Vorliegen mindestens einer Meldung aufmerksam machen, gekennzeichnet durch dritte Schaltungsmittel (29, 17), welche aufgrund der Einleitung eines Abrufs in den Arbeitszustand versetzt werden und dabei die zweiten Schaltungsmittel (26, 27) veranlassen, ein Rufsignal, das beim Rufempfänger (28) des Adressaten der abgerufenen Meldung die Erzeugung eines akustischen Signals bewirkt, auszusenden, welche ferner auf den Empfang dieses ihnen vom Rüfempfänger (28) über die zum Abruf benützte Teilnehmerstation (2), die zugehörige Teilnehmerleitung und die Zentrale (1) zugeführten akustischen Signals ansprechen und welche die Wiedergabe einer abgerufenen gespeicherten Meldung durch die ersten Schaltungsmittel (9) vom Empfang des genannten, der Identifizierung des Anrufers dienenden akustischen Signals abhängig machen.

2. Anlage nach dem Anspruch 1, gekennzeichnet durch eine derartige Ausbildung der dritten Schaltungsmittel (29, 17), dass sie beim Abruf einer Meldung für einen bestimmten Adressaten, sofern sie das genannte Signal über das Telefon nicht empfangen, dem Abrufer lediglich bekanntgeben, dass für den betreffenden Adressaten Meldungen gespeichert sind.

3. Anlage nach dem Anspruch 2, gekennzeichnet durch einen in Teilspeicher (20) unterteilten Daten-Speicher (19) und durch vierte Schaltungsmittel (24), welche jedem Adressaten von Meldungen einen Teilspeicher (20) zuteilen und dort die Uhrzeit der Einspeicherung der ersten für den betreffenden Adressaten bestimmten Meldung speichern und beim Abruf der Meldung wiederum löschen, und durch eine derartige Ausbildung der dritten Schaltungsmittel (29, 17), dass sie beim genannten Abruf einer Meldung, sofern sie das genannte Signal über das Telefon nicht empfangen, dem Anrufer zusätzlich die Uhrzeit übermitteln, welche in dem dem Adressaten der Meldung zugeteilten Teilspeicher (20, 23) gespeichert ist.

## Claims

1. Installation connected to a telephone exchange (1) and having first circuit means (9) for storing oral messages transmitted over the telephone, each directed to different specific addressees (2), and for reproduction thereof upon polling over the telephone by an addressee (2), further having second circuit means (26, 27) for the wireless transmission of call signals associated with the individual addressees, and having call receivers (28) assigned to the individual addressees, which call receivers each react by producing an acoustic signal to the reception of a call signal transmitted by the second circuit means (26, 27) and associated with the respective addressee, the first circuit means (9) periodically calling to the attention of the addressees of these messages by means of said acoustic signal, with the aid of the second circuit means (26, 27) and of the call receivers (28), the presence of at least one message as long as messages are stored by the first circuit means (9), characterized by third circuits means (29, 17) which, based upon the initiation of polling, are made operative and thereupon cause the second circuit means (26, 27) to transmit a call signal which brings about the producing of an acoustic signal at the call receiver (28) of the addressee of the polled message, which further respond to the reception of this acoustic signal, supplied to them by the call receiver (28) via the subscriber set (2) used for polling, the associated subscriber line, and the exchange (1), and which make the reproduction of a polled, stored message by the first circuit means (9) dependent upon the reception of the said acoustic signal serving to identify the caller.

2. Installation according to claim 1, characterized by a design of the third circuit means (29, 17) such that upon polling of a message for a specific addressee, insofar as they do not receive the said signal over the telephone, they merely make known to the poller that messages are stored for the respective addressee.

3. Installation according to claim 2, characterized by a memory (19) divided into sub-memories (20) and by fourth circuit means (24) which assign a sub-memory (20) to each addressee of messages and store there the time at which the first message intended for the respective addressee was stored in and erase it again upon polling of the message, and by a design of the third circuit means (29, 17) such that upon the said polling of a message, insofar as they do not receive the said signal over the telephone, they additionally transmit to the caller the time which is stored in the sub-memory (20, 23) assigned to the addressee of the message.

## Revendications

1. Installation, en liaison avec un central téléphonique (1), comprenant des premiers moyens de circuit (9) pour l'enregistrement de messages oraux transmis par téléphone et adressés à différents destinataires (2), et pour leur reproduction, lors d'un rappel par téléphone provenant d'un destinataire (2), comprenant de plus des seconds moyens de circuit (26, 27) pour l'émission sans fil de signaux d'appel attribués aux destinataires individuels, et comprenant des récepteurs d'appel (28), distribués aux destinataires individuels, qui réagissent chacun par la génération d'un signal acoustique à la réception d'un signal d'appel attribué aux destinataires correspondants et émis par les seconds moyens de circuit (26, 27). Les premiers moyens de circuit rendant, à l'aide des seconds moyens de circuit (26, 27) et des récepteurs d'appel (28), et aussi longtemps que des messages sont enregistrés, les destinataires de ces messages périodiquement attentifs à la présence d'au moins un message par le moyen dudit signal acoustique, caractérisée en ce qu'elle comprend des troisièmes moyens de circuit (29, 17), qui sont amenés à l'état de travail du fait de l'engagement d'un rappel et qui, alors, amènent les seconds moyens à circuit (26, 27) à émettre un signal d'appel qui provoque la génération d'un signal acoustique dans le récepteur d'appel (28) du destinataire du message objet du rappel, ces troisièmes moyens de circuit (29, 17) réagissant de plus à la réception de ce signal acoustique qui leur est transmis, depuis le récepteur d'appel (28), par la station de téléphone (2) utilisée pour leur rappel, la ligne téléphonique correspondante, et le central (1), ces troisièmes moyens rendant alors la reproduction, par les premiers moyens de circuit (9), d'un message enregistré, objet du rappel, dépendante de la réception dudit signal acoustique servant à l'identification du rappelant.

2. Installation selon la revendication 1, caractérisée par une constitution des troisièmes moyens de circuit (29, 17) telle que, lors d'un rappel concernant un message pour un destinataire déterminé, si ledit signal n'est pas reçu par l'intermédiaire du téléphone, il est simplement indiqué au rappelant qu'aucun message n'est enregistré par le destinataire correspondant.

3. Installation selon la revendication 2, caractérisée par une mémoire de données (19) subdivisée en mémoires partielles (20) et par des quatrièmes moyens de circuit (24) qui attribuent à chaque destinataire de messages une mémoire partielle (20) et qui y mémorisent le temps d'horloge de l'enregistrement du premier message pour le destinataire correspondant, et l'effaçant à nouveau lors d'un rappel du message, et par une constitution des troisièmes moyens de circuit (19, 17) telle que lors d'un dit rappel d'un message, pour autant qu'ils ne reçoivent pas ledit signal par le téléphone, communique de plus au rappelant le temps d'horloge qui est enregistré dans la mémoire partielle (20, 23) attribuée au destinataire du message.